# EUROPEAN PATENT APPLICATION

(11) **EP 4 221 383 A1**
(43) Date of publication of application: **02.08.2023**
(21) Application number: 22810174.7
(22) Date of filing: 28.03.2022
(51) Int. Cl.: H04W 68/02, H04B 7/185

(54) **5G CORE NETWORK-BASED LOW-EARTH-ORBIT SATELLITE PAGING METHOD, SYSTEM, AND APPARATUS, AND MEDIUM**

(30) Priority: 27.05.2021 CN 202110583001
(71) Applicant: IPlook Networks Co., Ltd., Guangzhou, Guangdong 510700 (CN)
(72) Inventor: WANG, Dan, Guangzhou, Guangdong 510700 (CN); ZHOU, Yuanchang, Guangzhou, Guangdong 510700 (CN); LV, Dong, Guangzhou, Guangdong 510700 (CN)
(74) Representative: Meyer, Thorsten
(86) International application number: PCT/CN2022/083500
(87) International publication number: WO 2022/247440

(57) **Abstract**

The present application discloses a 5G core network-based low-earth-orbit satellite paging method, system, and apparatus, and a storage medium. The method comprises: calculating real-time locations of satellite terminals according to historical locations of the satellite terminals; calculating real-time locations of satellites according to satellite ephemeris data and/or satellite almanac data; calculating a satellite list according to the real-time locations of the satellite terminals and the real-time locations of the satellites; acquiring a spot beam list corresponding to each satellite in the satellite list; using a prediction model to calculate the busyness probability of each spot beam in the spot beam list; and selecting the spot beam having the smallest busyness probability to perform paging. In the present application, the objective of paging the satellite terminals can be achieved without needing to blindly send messages to a batch of satellites, thereby reducing signaling consumption and paging delay, thus improving communication efficiency. The present application can be widely applied into the technical field of satellite mobile communications.

## Description

### CROSS-REFERENCE TO RELATED APPLICATION

The present application claims the priority of a Chinese patent application No. 202110583001.3, filed May 27, 2021, titled of "Paging Method, System, Apparatus and Medium for Low-Earth-Orbit Satellite based on 5G Core Network", the entire content of which is incorporated herein by reference.

### TECHNICAL FIELD

This application relates to the technical field of mobile communication, and in particular to a paging method, a system, an apparatus and a medium for low-earth-orbit satellite based on 5G core network.

### BACKGROUND

With the rapid development of satellite communication system, the problems restricting the connection quality, data transmission rate, and operation cost of the early low-earth-orbit satellite communication system have been solved, and the application time of the low-earth-orbit satellite communication is ripe. Orbit and spectrum are very important conditions for the normal operation of communication satellites, and the combination of 5G and low-earth-orbit satellites can bring high-quality communications with global coverage. However, due to the high-speed movement of the low-earth-orbit satellite system, there will be frequent handovers on links. The communication may be interrupted or the communication delay may be greatly increased if no suitable link is handed over.

At present, most paging is coarse-grained, that is, a large number of satellites are paged to connect a satellite terminal in idle state, which brings a large amount of signaling overhead to generate a great pressure on the satellite communication, and results in low communication efficiency accordingly.

### SUMMARY OF THE INVENTION

The present application is intended to solve at least one of the technical problems existing in the prior art. For this purpose, the present application provides a paging method, a system, an apparatus and a medium for low-earth-orbit satellite based on 5G core network.

The technical solutions of the present application follow.

As one aspect, the embodiment of the present application includes a paging method for low-earth-orbit satellite based on 5G core network, including:
calculating a real-time location of a satellite terminal according to history locations of the satellite terminal;
calculating a real-time location of a satellite according to satellite ephemeris data and/or satellite almanac data;
calculating a satellite list according to the real-time location of the satellite terminal and the real-time location of the satellite;
acquiring a spot beam list corresponding to each satellite in the satellite list;
calculating a busy probability of each spot beam in the spot beam list by using a prediction model;
selecting the spot beam having a smallest busy probability to perform paging.

Further, the history locations of the satellite terminal is obtained by following steps:
sending, by the satellite terminal, an NAS message to an AMF of the 5G core network;
obtaining, by the AMF of the 5G core network, the history locations of the satellite terminal according to the NAS message, and storing the history locations of the satellite terminal in a UDM.

Further, calculating a satellite list according to the real-time location of the satellite terminal and the real-time location of the satellite, includes:
calculating a first distance, wherein the first distance is a distance between the real-time location of the satellite and the real-time location of the satellite terminal;
comparing the first distance with a preset threshold value;
screening out a target satellite and establishing as a satellite list, wherein the target satellite is a satellite corresponding to the first distance smaller than the preset threshold value.

Further, the prediction model is obtained through generalized linear prediction modeling, specifically including:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time;
predicting and obtaining the busy probability of the target spot beam at the current time according to the first busy probability and the second busy probability.

Further, the busy probability is obtained according to available channels, specifically including:
setting a first threshold value of a number of available channels;
obtaining the busy probability by comparing the number of available channels with the first threshold value.

As another aspect, the embodiment of the present application includes a paging system for low-earth-orbit satellite based on 5G core network, including:
a first calculation module, configured to calculate a real-time location of a satellite terminal according to history locations of the satellite terminal;
a second calculation module, configured to calculate a real-time location of a satellite according to satellite ephemeris data and/or satellite almanac data;
a third calculation module, configured to calculate a satellite list according to the real-time location of the satellite terminal and the real-time location of the satellite;
an acquisition module, configured to acquire a spot beam list corresponding to each satellite in the satellite list;
a fourth calculation module, configured to calculate a busy probability of each spot beam in the spot beam list by using a prediction model;
a paging module, configured to select the spot beam having a smallest busy probability to perform paging.

Further, the third calculation module includes:
a calculation unit, configured to calculate a first distance, wherein the first distance is a distance between the real-time location of the satellite and the real-time location of the satellite terminal;
a comparison unit, configured to compare the first distance with a preset threshold value;
a screening and establishing unit, configured to screen out a target satellite and establish as a satellite list, wherein the target satellite is a satellite corresponding to the first distance smaller than the preset threshold value.

Further, the prediction model used in the fourth calculation module is obtained through generalized linear prediction modeling, specifically including:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time;
predicting and obtaining the busy probability of the target spot beam at the current time according to the first busy probability and the second busy probability.

As one more aspect, the embodiment of the present application includes a paging apparatus for low-earth-orbit satellite based on 5G core network, including:
at least one processor;
at least one memory for storing at least one program;
the at least one program, when executed by the at least one processor, causing the at least one processor to implement the method for low-earth-orbit satellite based on 5G core network.

As one more aspect, the embodiment of the present application includes a computer-readable storage medium, having a processor-executable program stored thereon, and the processor-executable program being configured to implement the method for low-earth-orbit satellite based on 5G core network when executed by a processor.

The beneficial effects of this application follow.

In present application, a real-time location of the satellite terminal is calculated according to history locations of the satellite terminal, a real-time location of the satellite is calculated according to satellite ephemeris data and/or satellite almanac data, then a satellite list is calculated according to the real-time location of the satellite terminal and the real-time location of the satellite, and then a spot beam list corresponding to each satellite in the satellite list is acquired, a busy probability of each spot beam in the spot beam list is then calculated by using a prediction model, and finally the spot beam having a smallest busy probability is selected to perform the paging. Therefore, there is no need to blindly send messages to a batch of satellites to achieve the purpose of paging the satellite terminal, which can reduce the signaling overhead and paging delay, and improve the communication efficiency.

Parts of additional aspects and advantages of this application will be given in the description below, and parts of those will become apparent from the description below, or will become known through the practice of this application.

### BRIEF DESCRIPTION OF THE DRAWINGS

FIG. 1 is a schematic diagram of a communication scene between the 5G core network and the low-earth-orbit satellite according to an embodiment of the present application.
FIG. 2 is a schematic diagram of the location of the satellite in the orbital plane according to an embodiment of the present application.
FIG. 3 is a flowchart of the paging method for low-earth-orbit satellite based on 5G core network according to an embodiment of the present application.
FIG. 4 is a schematic diagram of obtaining the corresponding spot beam list in the satellite list according to an embodiment of the present application.
FIG. 5 is a flowchart of the paging method for low-earth-orbit satellite based on 5G core network according to a specific embodiment of the present application.
FIG. 6 is a structural diagram of the paging device for low-earth-orbit satellite based on 5G core network according to a specific embodiment of the present application.

### DETAILED DESCRIPTION OF ILLUSTRATED EMBODIMENTS

Embodiments of the present application are described in detail below, examples of which are shown in the attached drawings where the same or similar labels throughout indicate the same or similar elements or elements having the same or similar function. The embodiments described below by reference to the attached drawings are illustrative and are intended only to interpret the present application, which are not to be construed as limitations on the present application.

In the description of the present application, it should be understood that the position descriptions indicated the position relationship such as "up", "down", "forward", "back", "left", and "right", etc., are based on the position relationship shown in the attached drawing, only for the purpose of facilitating the description of the present application and simplifying the description, which does not indicate or imply that the related device or element must have such a particular position, or must be constructed and operated in such a particular position. Therefore, it cannot be construed as a restriction on the present application.

In the description of the present application, the term "several" means one or more, and the terms of "multiple" or "a plurality of" mean more than two, the terms of "greater than", "smaller than" and "more than" are understood as excluding the number itself, while the terms of "above", "below" and "within" are understood as including the number itself. Descriptions of "first", "second", etc. are used only for the purpose of distinguishing technical features and are not understood to indicate or imply any relative importance or the number of indicated technical features or the sequence of indicated technical features.

In the description of the present application, unless otherwise expressly limited, the terms such as "set", "configure", "install", "connect" should be interpreted broadly, and the specific meaning of the above terms in the present application can be reasonably determined by the technical person skilled in the technical field based on the specific content of the technical solution.

The embodiments of the present application will be further elaborated in combination with the attached drawings as follows.

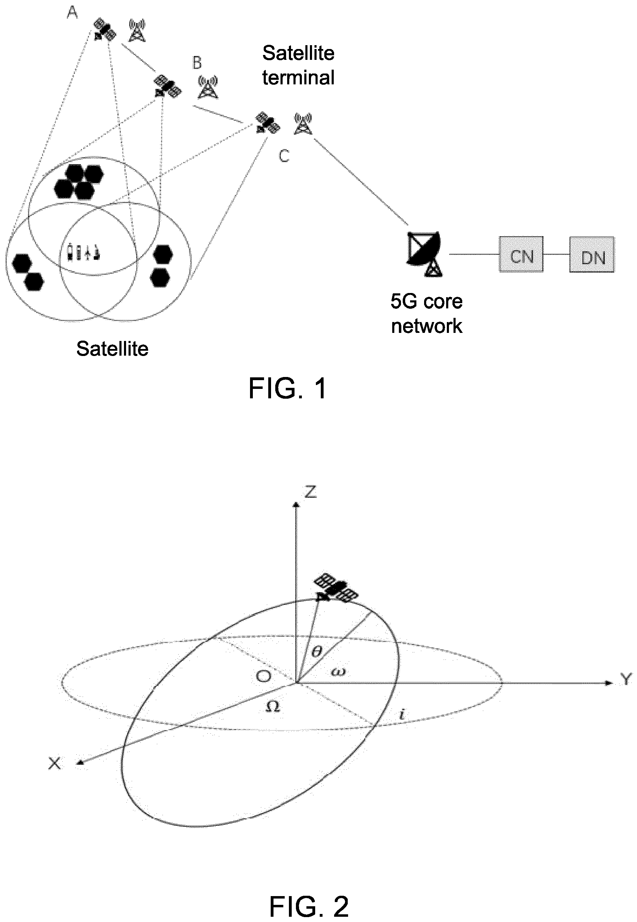

Referring to FIG. 1, it's seen that, when the 5G core network pages a satellite terminal, the satellite terminal may be covered by multiple satellites at the same time, that is, multiple spot beams may be selected. In order to improve the paging accuracy, it is unadvisable to blindly paging all spot beams covering the satellite terminal, which may cause a great amount of signaling overhead and bring a great burden to the whole system.

Referring to FIG. 2, in the low-earth-orbit satellites, frequent handovers are needed in order to maintain the continuity of data transmission due to the high-speed movement of the satellites. Therefore, it is very important to locate the most appropriate satellite to reduce the times of handover, which needs the real-time locations of the satellites. However, a plurality of satellites will be set in constellation design of low-earth-orbit satellites, for achieving the global coverage. If all the real-time locations are transmitted by the satellites in real time, a large amount of communication resources will be wasted, on one hand; and the accuracy of the real-time locations will be lowered due to the delay, on the other hand. FIG. 2 shows the location of the satellite in the orbital plane. The orbital plane of the satellite is an ellipse. Satellite ephemeris data or satellite almanac data are necessary to calculate the location of the satellite.

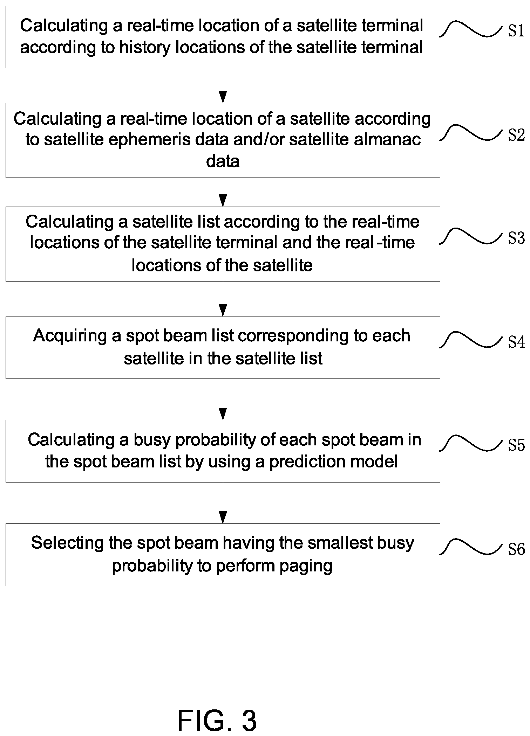

In view of this, referring to FIG. 3, a paging method for low-earth-orbit satellite based on 5G core network provided by an embodiment of the present application includes, but is not limited to the following steps:
S1, calculating a real-time location of a satellite terminal according to history locations of the satellite terminal;
S2, calculating a real-time location of a satellite according to satellite ephemeris data and/or satellite almanac data;
S3, calculating a satellite list according to the real-time locations of the satellite terminal and the real-time locations of the satellite;
S4, acquiring a spot beam list corresponding to each satellite in the satellite list;
S5, calculating a busy probability of each spot beam in the spot beam list by using a prediction model; and
S6, selecting the spot beam having the smallest busy probability to perform paging.

In the present embodiment, the best spot beam is screened out for paging, and the generalized linear prediction is used to predict which spot beam has a high probability of being idle. All the frequency points, locations and busy/idle states of the spot beams may be predicted, specifically, a next second is predicted by using the previous two seconds. A prediction model is established by the generalized linear prediction and stored, then a real-time busy probability of the spot beam is calculated by the prediction model, and then by comparing the busy probabilities, the spot beam with the smallest busy probability is selected to perform the paging. In such a way, the signaling overhead may be greatly reduced since it's unnecessary to perform the paging for all spot beams.

Regarding to Step S1, the history locations of the satellite terminal is obtained by the following steps:
S101, sending, by the satellite terminal, an NAS messages to an AMF of the 5G core network;
S102, obtaining, by the AMF of the 5G core network, the history locations of the satellite terminal according to the NAS message, and storing the history locations of the satellite terminal in a UDM.

In this embodiment, the location information of the satellite terminal includes timestamp, latitude, longitude, altitude, vx, vy, and vz, etc., as shown in Table 1 for details. The history location data of the satellite terminal stored in the UDM may be transferred to the database by the UDM.

**Table 1 - Schematic table of satellite terminal location information**

| IP | timestamp | latitude | longitude | altitude | vx | vy | vz |
|---|---|---|---|---|---|---|---|
| 17.20.2.211 | 20210310-12:20:30 | 1 | 0.5 | 100 | 20 | 30 | 40 |
| 17.20.2.2 | 20210310-12:20:30 | 2 | 0.6 | 50 | 10 | 20 | 30 |

Regarding to Step S2, since the satellite terminal may be covered by multiple satellites at the same time, it is necessary to further calculate the real-time locations of the multiple satellites according to satellite ephemeris data and/or satellite almanac data. Table 2 shows the satellite almanac data which includes the brief satellite orbit parameters with a relatively long period of validity of half a year usually. Table 3 shows the satellite ephemeris data which adds more parameters on the basis of the parameters shown in Table 2, that is, the satellite ephemeris data includes the detailed satellite orbit parameters with a period of validity of only 4 hours.

**Table 2 - Satellite almanac data**

| Number | Parameter | Definition |
|---|---|---|
| 1 | SID | ID No. of Satellite |
| 2 | toe | Reference time for satellite |
| 3 | *α* | Semi-major axis of satellite orbit |
| 4 | *e* | Eccentricity of satellite orbit |
| 5 | *δi* | Orbital inclination |
| 6 | Ω₀ | Longitude of ascending node at reference time |
| 7 | Ω | Rate of longitude of ascending node of orbit |
| 8 | *ω* | Argument of Perigee |
| 9 | M | Mean Anomaly at toe |

**Table 3 - Satellite ephemeris data**

| Number | Parameter | Definition |
|---|---|---|
| 10 | *δn* | Correction to mean motion |
| 11 | Crs | Amplitude of sine harmonic correction to argument of latitude |
| 12 | Crc | Amplitude of cosine harmonic correction to argument of latitude |
| 13 | Cps | Amplitude of sine harmonic correction to orbit radius |
| 14 | *Cpc* | Amplitude of cosine harmonic correction to orbit radius |
| 15 | Cis | Amplitude of sine harmonic correction to orbital inclination |
| 16 | Cic | Amplitude of cosine harmonic correction to orbital inclination |
| 17 | i | Rate of orbital inclination to time |

In this embodiment, after the real-time locations of multiple satellites are calculated according to the satellite ephemeris data and/or the satellite almanac data, that is, Step S3 of calculating a satellite list according to the real-time locations of the satellite terminal and the real-time locations of the satellite is performed, and Step S3 includes:
S301, calculating a first distance, wherein the first distance is a distance between the real-time location of the satellite and the real-time location of the satellite terminal;
S302, comparing the first distance with a preset threshold value; and
S303, screening out a target satellite and establishing as a satellite list, wherein the target satellite is a satellite corresponding to the first distance smaller than the preset threshold value.

In this embodiment, based on the real-time locations of the satellites and the real-time location of the satellite terminal, all the satellites whose distance from the satellite terminal is smaller than the threshold value D can be calculated, and then a satellite list of all accessible satellites can be obtained.

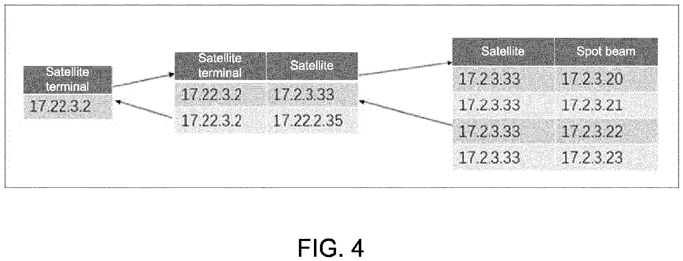

Referring to FIG. 4, after obtaining the satellite list, a spot beam list corresponding to each satellite in the satellite list is further searched.

In this embodiment, the prediction model is used to calculate a busy probability of each spot beam in the spot beam list. Specifically, the prediction model is obtained through generalized linear prediction modeling, specifically including:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time; and
predicting the busy probability of the target spot beam at the current time according to the first busy probability and the second busy probability.

In this embodiment, the prediction model is established by generalized linear prediction modeling and is stored in the database. Specifically, the model in the present embodiment is established by using the data of one month. In Table 4, busy/idle states of two spot beams at the past two previous times with respect to the current time t are shown, and the busy/idle state is determined by available channels under the beam. Specifically, a threshold for the number of available channels may be set. The spot beam is considered to be in busy state once the number of available channels is smaller than the threshold value, otherwise, the spot beam is considered to be in idle state. As an algorithm of the generalized linear prediction, a busy/idle state of the current spot beam is predicted by using the busy/idle states at the past two times.

**Table 4 - Schematic table showing busy/idle state of spot beam**

| Spot beam | Time | Busy/idle state of spot beam |
|---|---|---|
| 17.2.3.20 | t-2 | Busy |
| 17.2.3.20 | t-1 | Busy |
| 17.2.3.21 | t-2 | Busy |
| 17.2.3.21 | t-1 | Idle |

In this embodiment, the prediction model is stored in the database, thus the busy probability of each spot beam may be calculated by extracting the corresponding prediction model from the database. Then, the spot beam with the smallest busy probability may be screened out, on which the paging is performed.

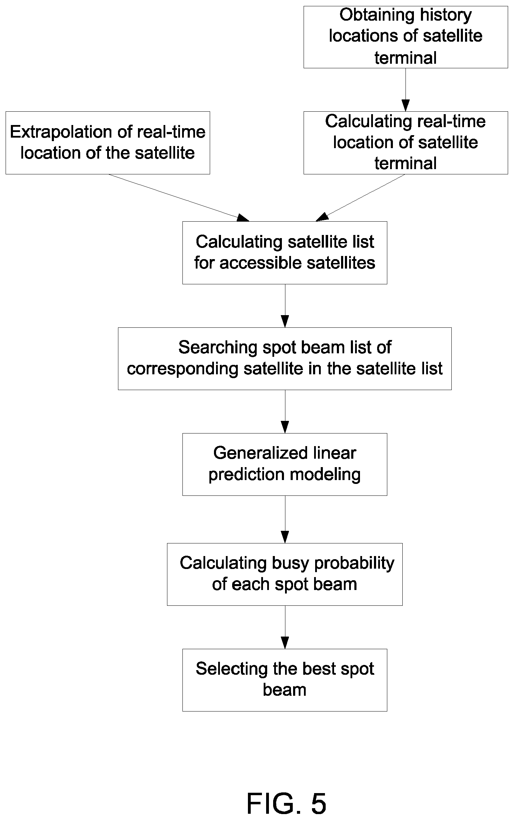

Specifically, referring to FIG. 5 showing a flowchart of the paging method for low-earth-orbit satellite based on 5G core network according to a specific embodiment of the present application. The specific implementation steps of the specific embodiment follow:
(1) obtaining history locations of the satellite terminal;
(2) calculating a real-time location of the satellite terminal according to the history locations of the satellite terminal;
(3) calculating and obtaining real-time locations of multiple satellites covering the satellite terminal;
(4) calculating a satellite list for accessible satellites according to the real-time location of the satellite terminal and the real-time locations of the satellites;
(5) searching a spot beam list of a corresponding satellite in the satellite list;
(6) obtaining a prediction model by generalized linear prediction modeling;
(7) calculating a busy probability of each spot beam in the spot beam list by using the prediction model;
(8) selecting the best spot beam having the smallest busy probability.

The paging method of low-earth-orbit satellite based on 5G core network according to the embodiments of the present application has the following technical effects.

In the embodiments of the present application, a real-time location of the satellite terminal is calculated according to history locations of the satellite terminal, a real-time location of the satellite is calculated according to satellite ephemeris data and/or satellite almanac data, then a satellite list is calculated according to the real-time location of the satellite terminal and the real-time location of the satellite, and then a spot beam list corresponding to each satellite in the satellite list is acquired, a busy probability of each spot beam in the spot beam list is then calculated by using a prediction model, and finally the spot beam having a smallest busy probability is selected to perform the paging. Therefore, there is no need to blindly send messages to a batch of satellites to achieve the purpose of paging the satellite terminal, which can reduce the signaling overhead and paging delay, and improve the communication efficiency.

The embodiments of the present application further provides a paging system for low-earth-orbit satellite based on 5G core network, including:
a first calculation module, configured to calculate a real-time location of a satellite terminal according to history locations of the satellite terminal;
a second calculation module, configured to calculate a real-time location of a satellite according to satellite ephemeris data and/or satellite almanac data;
a third calculation module, configured to calculate a satellite list according to the real-time location of the satellite terminal and the real-time location of the satellite;
an acquisition module, configured to acquire a spot beam list corresponding to each satellite in the satellite list;
a fourth calculation module, configured to calculate a busy probability of each spot beam in the spot beam list by using a prediction model; and
a paging module, configured to select the spot beam having a smallest busy probability to perform paging.

Specifically, the third calculation module includes:
a calculation unit, configured to calculate a first distance, wherein the first distance is a distance between the real-time location of the satellite and the real-time location of the satellite terminal;
a comparison unit, configured to compare the first distance with a preset threshold value; and
a screening and establishing unit, configured to screen out a target satellite and establish as a satellite list, wherein the target satellite is a satellite corresponding to the first distance smaller than the preset threshold value.

Specifically, the prediction model used in the fourth calculation module is obtained through generalized linear prediction modeling, specifically including:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time; and
predicting and obtaining the busy probability of the target spot beam at the current time according to the first busy probability and the second busy probability.
The contents of the method embodiments shown in FIG. 3 are applicable to the system embodiments. The specific functions realized by the system embodiments are the same as those of the method embodiments shown in FIG. 3, and the beneficial effects achieved are the same as those achieved by the method embodiments shown in FIG. 3.

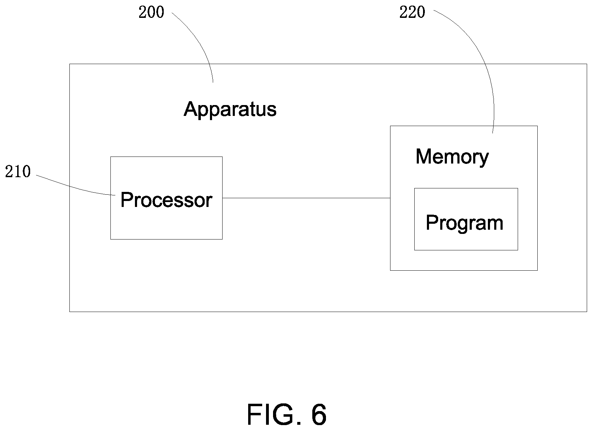

Referring to FIG. 6, The embodiments of the present application further provides a paging apparatus 200 for low-earth-orbit satellite based on 5G core network, specifically including:
at least one processor;
at least one memory for storing at least one program;
the at least one program, when executed by the at least one processor 210, causing the at least one processor 210 to implement the method shown in FIG. 3.

As a non-transient computer-readable storage medium, the memory 220 can be used to store non-transient software programs and non-transient computer executable programs. The memory 220 may include a high-speed random access memory and may also include a non-transient memory, such as at least one disk storage device, flash memory device, or other non-transient solid-state storage devices. In some embodiments, the memory 220 optionally includes a remote memory remotely configured relative to the processor 210, which may be connected to the processor 210 over a network. Examples of such networks include, but are not limited to, the Internet, enterprise intranets, local area networks, mobile communication networks and their combinations.

It is understood that the structure of the apparatus is not limited to that shown in FIG. 6, and the apparatus may include more or fewer parts than shown, or combinations of parts, or different parts arrangements.

In the apparatus 200 shown in FIG. 6, the processor 210 may call up the programs stored in the memory, and perform, but is not limited to, the steps of the embodiment shown in FIG. 3.

The apparatus 200 described in the above embodiment is only exemplary, where the units described as separate parts may or may not be physically separated, and located in one place or distributed on multiple network units. Some or all modules may be selected according to the actual needs to realize the purpose of the embodiments.

The embodiment of the present application also provides a computer-readable storage medium, having a processor executable program stored thereon, and the processor-executable program is configured to implement the method shown in FIG. 3 when executed by a processor.

The embodiment of the present application also discloses a computer program product or a computer program which includes computer instructions stored in a computer-readable memory medium. A processor of a computer device can read the computer instructions from the computer-readable storage medium, and executes the computer instructions, causing the computer device to implement the method shown in FIG. 3.

It is understood that all or some of the steps in the method and systems disclosed above may be implemented as software, firmware, hardware, and their appropriate combinations. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium which may include a computer storage medium (or a non-transient medium) and a communication medium (or a transient medium). As well known to the persons skilled in the art, the phrase "computer storage medium" may include volatile and non-volatile, removable and non-removable medium implemented in any method or technique configured to store information, such as computer readable instructions, data structures, program modules, or other data. The computer storage medium includes, but is not limited to, a RAM, a ROM, an EEPROM, flash memory or other memory technology, a CD-ROM, a digital multipurpose disk (DVD) or an optical disk storage, a tape cartridge, a magnetic tape, a disk storage or other magnetic storage devices, or any other media that can be used to store the desired information and can be accessed by a computer. In addition, as well known to the persons skilled in the art, the communication medium usually contains computer-readable instructions, data structures, program modules, or other data in a modulated data signal such as a carrier or other transmission mechanism, and may include any information delivery medium.

A detailed description of the embodiments of this application embodiment is provided above in combination with the attached drawings. However, this application is not limited to the above embodiments, and various modifications may be further made within the scope of knowledge possessed by ordinary technical personnel in the technical field, without deviating from the spirit and principles of this application.

## Claims

1. A paging method for low-earth-orbit satellite based on 5G core network, comprising:
calculating a real-time location of a satellite terminal according to history locations of the satellite terminal;
calculating a real-time location of a satellite according to satellite ephemeris data and/or satellite almanac data;
calculating a satellite list according to the real-time location of the satellite terminal and the real-time location of the satellite;
acquiring a spot beam list corresponding to each satellite in the satellite list;
calculating a busy probability of each spot beam in the spot beam list by using a prediction model;
selecting the spot beam having a smallest busy probability to perform paging.

2. The paging method for low-earth-orbit satellite based on 5G core network according to claim 1, wherein the history locations of the satellite terminal is obtained by following steps:
sending, by the satellite terminal, an NAS message to an AMF of the 5G core network;
obtaining, by the AMF of the 5G core network, the history locations of the satellite terminal according to the NAS message, and storing the history locations of the satellite terminal in a UDM.

3. The paging method for low-earth-orbit satellite based on 5G core network according to claim 1, wherein said calculating a satellite list according to the real-time location of the satellite terminal and the real-time location of the satellite, comprises:
calculating a first distance, wherein the first distance is a distance between the real-time location of the satellite and the real-time location of the satellite terminal;
comparing the first distance with a preset threshold value;
screening out a target satellite and establishing as a satellite list, wherein the target satellite is a satellite corresponding to the first distance smaller than the preset threshold value.

4. The paging method for low-earth-orbit satellite based on 5G core network according to claim 1, wherein the prediction model is obtained through generalized linear prediction modeling, specifically comprising:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time;
predicting and obtaining the busy probability of the target spot beam at the current time according to the first busy probability and the second busy probability.

5. The paging method for low-earth-orbit satellite based on 5G core network according to claim 4, wherein the busy probability is obtained according to available channels, specifically comprising:
setting a first threshold value of a number of available channels;
obtaining the busy probability by comparing the number of available channels with the first threshold value.

6. A paging system for low-earth-orbit satellite based on 5G core network, comprising:
a first calculation module, configured to calculate a real-time location of a satellite terminal according to history locations of the satellite terminal;
a second calculation module, configured to calculate a real-time location of a satellite according to satellite ephemeris data and/or satellite almanac data;
a third calculation module, configured to calculate a satellite list according to the real-time location of the satellite terminal and the real-time location of the satellite;
an acquisition module, configured to acquire a spot beam list corresponding to each satellite in the satellite list;
a fourth calculation module, configured to calculate a busy probability of each spot beam in the spot beam list by using a prediction model;
a paging module, configured to select the spot beam having a smallest busy probability to perform paging.

7. The paging system for low-earth-orbit satellite based on 5G core network according to claim 6, wherein the third calculation module comprises:
a calculation unit, configured to calculate a first distance, wherein the first distance is a distance between the real-time location of the satellite and the real-time location of the satellite terminal;
a comparison unit, configured to compare the first distance with a preset threshold value;
a screening and establishing unit, configured to screen out a target satellite and establish as a satellite list, wherein the target satellite is a satellite corresponding to the first distance smaller than the preset threshold value.

8. The paging system for low-earth-orbit satellite based on 5G core network according to claim 6, wherein the prediction model used in the fourth calculation module is obtained through generalized linear prediction modeling, specifically comprising:
calculating a first busy probability, wherein the first busy probability is a busy probability of a target spot beam at a first time, the target spot beam is any spot beam in the spot beam list, and the first time is a previous time adjacent to a current time;
calculating a second busy probability, wherein the second busy probability is a busy probability of the target spot beam at a second time, and the second time is a previous time adjacent to the first time;
predicting and obtaining the busy probability of the target spot beam at the current time according to the first busy probability and the second busy probability.

9. A paging apparatus for low-earth-orbit satellite based on 5G core network, comprising:
at least one processor;
at least one memory for storing at least one program;
said at least one program, when executed by said at least one processor, causing said at least one processor to implement the method for low-earth-orbit satellite based on 5G core network according to any of claims 1-5.

10. A computer-readable storage medium, having a processor-executable program stored thereon, and the processor-executable program being configured to implement the method for low-earth-orbit satellite based on 5G core network according to any of claims 1-5 when executed by a processor.
